# EUROPEAN PATENT APPLICATION

(11) **EP 3 996 466 A1**
(43) Date of publication of application: **11.05.2022**
(21) Application number: 20836199.8
(22) Date of filing: 03.07.2020
(51) Int. Cl.: H04W 92/00, H04W 92/04, H04W 24/02

(54) **METHOD AND DEVICE FOR SUPPORTING PORT CONTROL**

(30) Priority: 05.07.2019 CN 201910606117
(71) Applicant: Vivo Mobile Communication Co., Ltd., Dongguan, Guangdong 523860 (CN)
(72) Inventor: KE, Xiaowan, Dongguan, Guangdong 523860 (CN)
(74) Representative: Lavoix
(86) International application number: PCT/CN2020/100161
(87) International publication number: WO 2021/004393

(57) **Abstract**

Embodiments of this disclosure provide a method for supporting port control and a device. The method includes: receiving port related control information; and performing a port related operation on a port according to the port related control information; where the port related control information includes at least one of the following: a port identifier, traffic class information, first routing information, priority regeneration related information, port transmission rate related information, bandwidth availability parameter related information, and transmission selection algorithm related information.

## Description

### CROSS-REFERENCE TO RELATED APPLICATIONS

This application claims priority to Chinese Patent Application No. 201910606117.7, filed in China on July 05, 2019, which is incorporated herein by reference in its entirety.

### TECHNICAL FIELD

Embodiments of this disclosure relate to the field of communications technologies, and specifically, to a method for supporting port control and a device.

### BACKGROUND

Many vertical industries have demands for time-sensitive communication. In the industrial Internet, there are time-sensitive data, such as robot instructions, that need to be executed sequentially within a specified time. However, network transmission resources are shared, and time-sensitive data cannot be supported due to delay and jitter in data transmission. Therefore, time-sensitive networking is proposed to support transmission of the time-sensitive data.

A transmit end of a time-sensitive data flow is referred to as a talker, and a receive end of the time-sensitive data flow is referred to as a listener. Data is forwarded through one or more bridges between the talker and the listener. A transmission medium of the talker, listener, or bridge may be a wireless connection. Therefore, the wireless communications system can form a bridge. How to support formation of a bridge by using the wireless communications system is a technical problem to be resolved urgently.

### SUMMARY

An objective of embodiments of this disclosure is to provide a method for supporting port control and a device, so as to resolve the problem of how to perform a port operation on a bridge formed by a wireless communications system.

According to a first aspect, some embodiments of this disclosure provides a method for supporting port control, applied to a first communications device, including:
receiving port related control information; and
performing a port related operation on a port according to the port related control information; where
the port related control information includes at least one of the following: a port identifier, traffic class information, first routing information, priority regeneration related information, port transmission rate related information, bandwidth availability parameter related information, and transmission selection algorithm related information.

According to a second aspect, some embodiments of this disclosure further provides a method for supporting port control, applied to a first communications device, including:
transmitting port related control information in a case that a first condition is met; where
the port related control information includes at least one of the following: a port identifier, traffic class information, first routing information, priority regeneration related information, port transmission rate related information, bandwidth availability parameter related information, and transmission selection algorithm related information.

According to a third aspect, some embodiments of this disclosure further provides a method for supporting port control, applied to a second communications device, including:
receiving bridge related control information and/or second control information related to a port; and
determining first control information related to the port according to the bridge related control information and/or the second control information related to the port; where
the first control information related to the port and/or the second control information related to the port includes at least one of the following: a port identifier, traffic class information, first routing information, priority regeneration related information, port transmission rate related information, bandwidth availability parameter related information, and transmission selection algorithm related information; and
the bridge related control information includes at least one of the following: a bridge identifier, second routing information, and priority regeneration related information.

According to a fourth aspect, some embodiments of this disclosure further provides a method for supporting port control, applied to a second communications device, including:
receiving a read request for bridge related control information and/or a read request for port related control information; and
transmitting the read request for port related control information; where
the read request for port related control information includes at least one of the following: a port identifier, traffic class information, a request for first routing information, a request for priority regeneration related information, a request for port transmission rate related information, a request for bandwidth availability parameter related information, and a request for transmission selection algorithm related information.

According to a fifth aspect, some embodiments of this disclosure further provide a first communications device, including:
a first receiving module, configured to receive port related control information; and
a first processing module, configured to perform a port related operation on a port according to the port related control information; where
the port related control information includes at least one of the following: a port identifier, traffic class information, first routing information, priority regeneration related information, port transmission rate related information, bandwidth availability parameter related information, and transmission selection algorithm related information.

According to a sixth aspect, some embodiments of this disclosure further provide a first communications device, including:
a first transmitting module, configured to transmit port related control information in a case that a first condition is met; where
the port related control information includes at least one of the following: a port identifier, traffic class information, first routing information, priority regeneration related information, port transmission rate related information, bandwidth availability parameter related information, and transmission selection algorithm related information.

According to a seventh aspect, some embodiments of this disclosure further provide a second communications device, including:
a second receiving module, configured to receive bridge related control information and/or second control information related to a port; and
a second processing module, configured to determine first control information related to the port according to the bridge related control information and/or the second control information related to the port; where
the first control information related to the port and/or the second control information related to the port includes at least one of the following: a port identifier, traffic class information, first routing information, priority regeneration related information, port transmission rate related information, bandwidth availability parameter related information, and transmission selection algorithm related information; and
the bridge related control information includes at least one of the following: a bridge identifier, second routing information, and priority regeneration related information.

According to an eighth aspect, some embodiments of this disclosure further provide a second communications device, including:
a third receiving module, configured to receive a read request for bridge related control information and/or a read request for port related control information; and
a third transmitting module, configured to transmit the read request for port related control information; where
the read request for port related control information includes at least one of the following: a port identifier, traffic class information, a request for first routing information, a request for priority regeneration related information, a request for port transmission rate related information, a request for bandwidth availability parameter related information, and a request for transmission selection algorithm related information.

According to a ninth aspect, some embodiments of this disclosure further provide a communications device, including a processor, a memory, and a program stored in the memory and capable of running on the processor, where when the program is executed by the processor, the steps of the foregoing method for supporting port control are implemented.

According to a tenth aspect, some embodiments of this disclosure further provide a readable storage medium, where the readable storage medium stores a program, and when the program is executed by a processor, the steps of the foregoing method for supporting port control are implemented.

In some embodiments of this disclosure, an operation may be performed on a port of a wireless communications system bridge, and related control information of the port of the wireless communications system bridge may be disclosed to the outside (for example, a CNC), thereby supporting implementation of a communications system bridge composed of a terminal, a time adapter, and a wireless communications network.

### BRIEF DESCRIPTION OF DRAWINGS

Other advantages and benefits will become apparent to those of ordinary skill in the art by reading detailed description of the preferred embodiments below. The accompanying drawings are merely intended to illustrate the preferred implementations and are not intended to limit this disclosure. Throughout the accompanying drawings, the same reference signs represent the same components. In the accompanying drawings:
FIG. 1 is a schematic architectural diagram of a wireless communications system;
FIG. 2 is a schematic diagram of a bridge;
FIG. 3 is a first flowchart of a method for supporting port control according to some embodiments of this disclosure;
FIG. 4 is a second flowchart of a method for supporting port control according to some embodiments of this disclosure;
FIG. 5 is a third flowchart of a method for supporting port control according to some embodiments of this disclosure;
FIG. 6 is a fourth flowchart of a method for supporting port control according to some embodiments of this disclosure;
FIG. 7 is a schematic flowchart of PDU session modification according to some embodiments of this disclosure;
FIG. 8 is a schematic flowchart of establishing a PDU session according to some embodiments of this disclosure;
FIG. 9 is a first schematic structural diagram of a first communications device according to some embodiments of this disclosure;
FIG. 10 is a second schematic structural diagram of a first communications device according to some embodiments of this disclosure;
FIG. 11 is a first schematic structural diagram of a second communications device according to some embodiments of this disclosure;
FIG. 12 is a second schematic structural diagram of a second communications device according to some embodiments of this disclosure; and
FIG. 13 is a schematic structural diagram of a communications device according to some embodiments of this disclosure.

### DESCRIPTION OF EMBODIMENTS

A method for supporting port control and a communications device provided in the embodiments of this disclosure may be applied to a wireless communications system. The wireless communications system may be a fifth-generation (Fifth-generation, 5G) mobile communications system, or an evolved packet system (Evolved Packet System, EPS), or a later evolved communications system. The wireless communications network in the embodiments of this disclosure may be a fifth-generation mobile communications network (Fifth-generation system, 5GS) or an LTE network. The following clearly and completely describes the technical solutions in the embodiments of this disclosure with reference to the accompanying drawings in the embodiments of this disclosure. Apparently, the described embodiments are merely some rather than all of the embodiments of this disclosure. All other embodiments that a person of ordinary skill in the art obtains without creative efforts based on the embodiments of this disclosure shall fall within the protection scope of this disclosure.

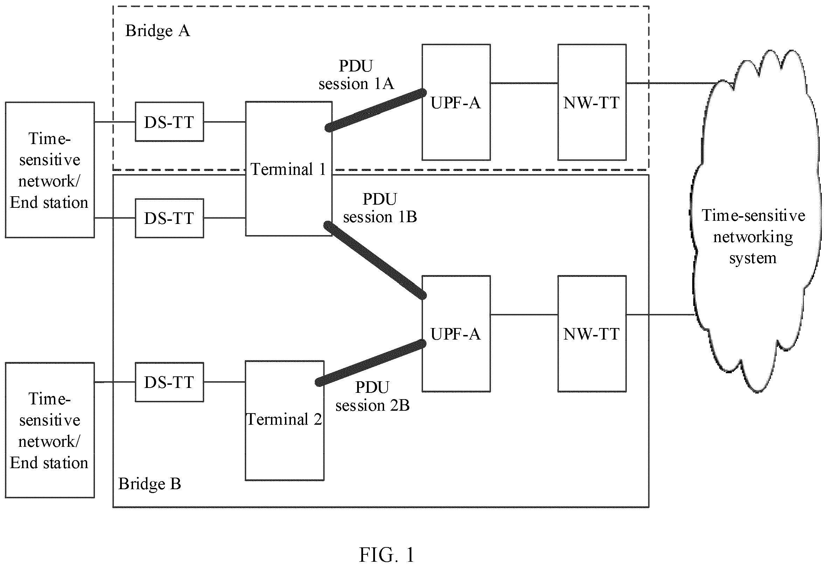

FIG. 1 is a schematic architectural diagram of a wireless communications system according to some embodiments of this disclosure.

A transmit end of a time-sensitive data flow is referred to as a talker, and a receive end of the time-sensitive data flow is referred to as a listener. Data is forwarded through one or more bridges between the talker and the listener. An end station (End Station) may be a talker or a listener. The bridge (Bridge) is responsible for data transmission between the talker and the listener.

User equipment (User Equipment, UE), a time-sensitive adapter, and a wireless communications network form a bridge (hereinafter referred to as a first bridge). For downlink data, a first adapter is an egress port of the bridge (Bridge), and a second adapter is an ingress port of the bridge. For uplink data, the first adapter is an ingress port of the bridge, and the second adapter is an egress port of the bridge.

The first adapter is a time-sensitive networking adapter (for example, a DS-TT) on device side. A port of the first adapter may be used to connect to another bridge or end station. The second adapter is a time-sensitive networking adapter (for example, an NW-TT) on network side. A port of the second adapter may be used to connect to another bridge or end station.

The first adapter and/or the second adapter may be time-sensitive networking adapter(s). The time-sensitive networking adapter may also be referred to as a time-sensitive networking translator (TSN (Time Sensing Network) TRANSLATOR).

The UE may be combined with the first adapter. A user plane function (User Plane Function, UPF) may be combined with the second adapter.

The UE may act as a proxy for the first adapter to establish a protocol data unit (Protocol Data Unit, PDU) session with the UPF. A port of the first adapter is associated with a port of the second adapter on the UPF through the PDU session. The port of the first adapter becomes a port of a first bridge.

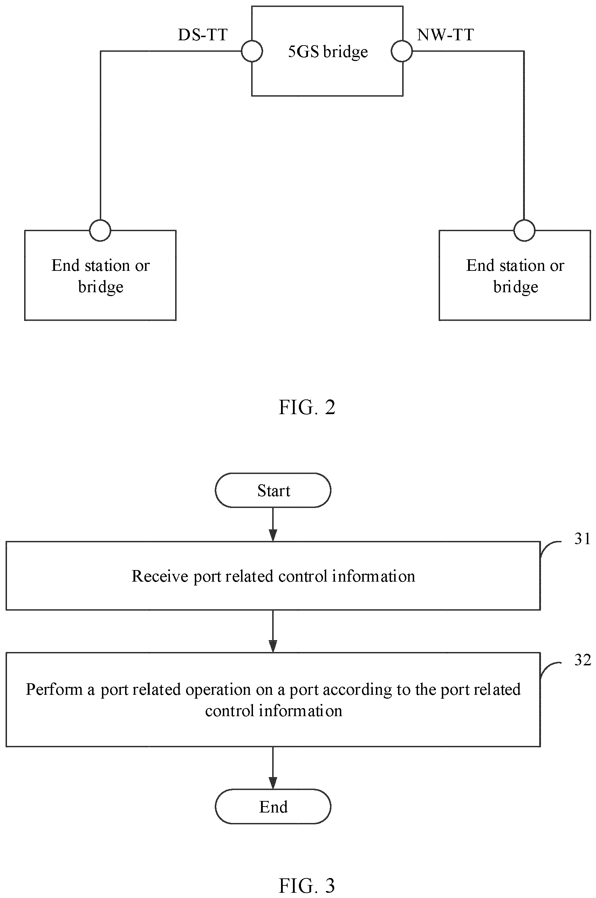

Referring to FIG. 2, in a case that a device in the time-sensitive networking lacks a wired connection, the bridge formed by the wireless communications system may be connected, through ports of a device-side time-sensitive networking translator (Device-side TSN translator, DS-TT) and a network-side time-sensitive networking translator (Network-side TSN translator, NW-TT), to a device of the same time-sensitive networking, especially in a case that the devices on both the DS-TT and the NW-TT sides lack wired connections.

To support configuration of a port of a bridge, the following requirements need to be addressed:
(1) To deliver a time-sensitive data flow to the end station within a limited time delay, it is necessary to determine, before the data is transmitted, a path through which the time-sensitive data flow passes, that is, a bridge and a port of the bridge. For a centralized architecture, a CNC (a control plane node of time-sensitive networking) performs data flow routing configuration on the port of the bridge (for example, when the bridge uses a spanning tree protocol, configuring Static Filtering Entry, and when the bridge supports a redundancy path (redundant path), configuring static tress). Routing configuration, for example, configures a media access control address (Media Access Control Address, MAC) address and a virtual local area network (Virtual Local Area Network, VLAN) ID that can be transmitted through the port. After the configuration is completed, a data flow carrying the MAC address and VLAN ID can be forwarded through the port.
(2) The bridge may receive a non-time-sensitive data flow. To deliver a time-sensitive data flow to the end station within a limited time delay, during bridge scheduling, the time-sensitive data flow is in a relatively high priority, and a priority of the non-time-sensitive data flow may be decreased to a lower priority (for example, priority 0). In this case, a priority regeneration table (Priority Regeneration Table or Priority Regeneration Override Table) is required to be configured for the port to remap the priorities.
(3) In the centralized architecture, the following configurations may be performed on the port of the bridge: transmission selection algorithm related information and a bandwidth availability parameter.

Problems: For the requirements of (1), (2) and (3), when the bridge is composed of UE, a time-sensitive adapter, and a wireless communications network, before the first adapter accesses the wireless communications network through the UE and becomes a part of the bridge, a port of the first adapter cannot be configured in advance, and in addition, related configuration information of the port of the first adapter cannot be read. Furthermore, configuration information of some bridges is port-specific, or specific to different traffic classes of the port, and can be directly configured for the port. Configuration information of some other bridges is used for the bridge as a whole, and how to correspond to individual ports in the bridge is also a problem to be resolved urgently.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in some embodiments of this disclosure. For example, when specific capability indication information transmitted by a device is not received, it can be deduced that the device does not support the capability.

Optionally, transmitting may include broadcasting, broadcasting by using a system message, or returning a response after receiving the request.

In an optional embodiment of this disclosure, the port may be an Ethernet port.

In an optional embodiment of this disclosure, the VLAN identifier may also be referred to as a VLAN tag (for example, a C-TAG and/or S-TAG).

In an optional embodiment of this disclosure, the port related information container may also be referred to as a port management information container.

In an optional embodiment of this disclosure, the port control information may be understood as all port related information managed by the bridge (for example, IEEE 802.1Q Section 12 Bridge Management).

In an optional embodiment of this disclosure, the control information (for example, port control information, first control information of the port, second control information of the port, and bridge control information) may also be referred to as management information (for example, port management information, first management information of the port, second management information of the port, and bridge management information).

In an optional embodiment of this disclosure, the wireless communications network may be referred to as a network for short.

In an embodiment of this disclosure, the wireless communications network may be at least one of the following: a public network and a non-public network.

In an embodiment of this disclosure,, the non-public network may be referred to as one of the following: a non-public communications network. The non-public network may include at least one of the following deployments: standalone non-public network (for example, a SNPN), and non-standalone non-public network (for example, a closed access group (Closed Access Group, CAG)). In an embodiment of this disclosure, the non-public network may include or be referred to as a private network. The private network may be referred to as one of the following: a private communications network, a private network, a local area network (LAN), a private virtual network (PVN), an isolated communications network, a dedicated communications network, or other names. It should be noted that a naming manner is not specifically limited in some embodiments of this disclosure.

The public network may be referred to as one of the following: a public communications network or other names. It should be noted that a naming manner is not specifically limited in some embodiments of this disclosure.

In an optional embodiment of this disclosure, a communications device may include at least one of the following: a communications network element and a terminal.

In an embodiment of this disclosure, a communications network element may include at least one of the following: a core network element and a radio access network element.

In some embodiments of this disclosure, the core network element (CN network element) may include, but is not limited to, at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function (Policy and Charging Rules Function, PCRF) unit, a serving GPRS support node (Serving GPRS Support Node, SGSN), a gateway GPRS support node (Gateway GPRS Support Node, GGSN), a radio access network device, unified data management (Unified Data Management, UDM), a unified data repository (Unified Data Repository, UDR), a home subscriber server (Home Subscriber Server, HSS), and an application function (Application Function, AF).

In some embodiments of this disclosure, the radio access network (Radio Access Network, RAN) network element may include but is not limited to at least one of the following: a radio access network device, a radio access network node, a radio access network function, a radio access network unit, a third generation partnership project (Third Generation Partnership Project, 3GPP) radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a NodeB (NodeB), a non-3GPP interworking function (Non-3GPP Inter Working Function, N3IWF), an access controller (Access Controller, AC) node, an access point (Access Point, AP) device, a wireless local area network (Wireless Local Area Networks, WLAN) node, or N3IWF

The base station may be a base transceiver station (BTS, Base Transceiver Station) in global system for mobile communications (Global System for Mobile Communications, GSM) or code division multiple access (Code Division Multiple Access, CDMA), or may be a NodeB (NodeB) in wideband code division multiple access (Wideband Code Division Multiple Access, WCDMA), or may be an evolved NodeB (eNB or e-NodeB, evolutional Node B) in LTE, or a 5G base station (gNB). This is not limited in some embodiments of this disclosure.

In some embodiments of this disclosure, the UE is the terminal. The terminal may include a relay that supports a terminal function and/or a terminal that supports a relay function. The terminal may also be referred to as a terminal device or user equipment (User Equipment, UE). The terminal may be a terminal side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that the specific type of the terminal is not limited in some embodiments of this disclosure.

In the specification and claims of this application, the term "include" and any other variants mean to cover a non-exclusive inclusion. For example, a process, method, system, product, or device that includes a list of steps or units is not necessarily limited to those steps or units, but may include other steps or units not expressly listed or inherent to such a process, method, product, or device. In addition, in the specification and claims, the use of "and/or" represents presence of at least one of the connected objects, for example, "A and/or B" indicates that the following three cases: only A, only B, or both A and B.

In the embodiments of this disclosure, the word such as "exemplary" or "for example" is used to represent giving an example, an instance, or an illustration. Any embodiment or design scheme described as "an example" or "for example" in some embodiments of this disclosure should not be construed as being more preferred or advantageous than other embodiments or design schemes. Specifically, the terms such as "an example" or "for example" are used to present related concepts in a specific manner.

The technologies described herein are not limited to fifth-generation (5th-generation, 5G) mobile communications systems, subsequent evolved communications systems, and LTE/LTE-Advanced (LTE-Advanced, LTE-A) systems, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are usually used interchangeably. The CDMA system may implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. The TDMA system may implement radio technologies such as global system for mobile communications (Global System for Mobile Communication, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. UTRA and E-UTRA are both part of the universal mobile telecommunications system (Universal Mobile Telecommunications System, UMTS). LTE and more advanced LTE (for example, LTE-A) are new UMTS versions that use E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). The technologies described in this specification may be used for the foregoing systems and radio technologies, and may also be used for other systems and radio technologies.

Referring to FIG. 3, some embodiments of this disclosure provide a method for supporting port control, applied to a first communications device. The first communications device includes but is not limited to at least one of the following: UE, a first adapter (for example, a DS-TT), a second adapter (for example, an NW-TT), and a UPF. The method includes step 31 and step 32.

Step 31: Receive port related control information.

Step 32: Perform a port related operation on a port according to the port related control information.

In some embodiments, the performing a port related operation includes at least one of the following: configuring the port, controlling whether to forward a data flow, controlling scheduling of a data flow, controlling queuing of a data flow, and controlling regeneration of a priority of a data flow. In an embodiment, the configuring the port can be understood as performing a writing operation on corresponding control information of the port.

In some embodiments, the port is an egress port.

In some embodiments, the port is a port of a first adapter. In this case, the first adapter and/or the UE may receive first configuration information of the port.

In some other embodiments, the port is a port of a second adapter. In this case, the second adapter and/or the UPF may receive the port related control information.

In some embodiments, the first communications device receives the port related control information in a port related information container.

Optionally, the step of receiving port related control information includes: receiving a port related information container, where the port related information container includes the port related control information.

In some embodiments, UE receives the port related control information from a network. The UE transmits the port related control information to the first adapter. The first adapter receives the port related control information from the UE.

Optionally, the port related control information may include at least one of the following: a port identifier, traffic class information, first routing information, priority regeneration related information, port transmission rate related information, bandwidth availability parameter related information, and transmission selection algorithm related information.

In some embodiments, one port can be uniquely identified through a bridge identifier and a port identifier.

Optionally, the port identifier includes at least one of the following: a bridge identifier, a port number, and a MAC address of the port. It is not difficult to understand that a plurality of ports on the first adapter and/or the second adapter may be connected to a plurality of bridges, and one port can be uniquely identified through a bridge identifier and a port number.

Optionally, the traffic class information is used to indicate different traffic classes (Traffic Class). A traffic class value may be an integer from 0 to 7, representing different traffic classes respectively. One port may have up to eight traffic classes. When the port related control information includes both the port identifier and the traffic class information, a traffic class indicated by the traffic class information is a traffic class on the port indicated by the port identifier.

In some embodiments, the port related control information is port-level control information. In some other embodiments, the port related control information is traffic class-level control information of the port. For example, the control information at the traffic class level may include at least one of the following: bandwidth availability parameter related information and transmission selection algorithm related information. The traffic class-level control information may include at least one of the following: first routing information, priority regeneration related information, and port transmission rate related information. Port-level control information should also carry the port identifier.

In an encoding embodiment, the port related control information includes a port identifier and one or more pieces of control information (port-level and/or traffic class-level control information). It is not difficult to understand that all the control information is related control information of the port indicated by the port identifier. In another encoding embodiment, the port related control information includes one or more pieces of control information, and each piece of control information includes a port identifier. It is not difficult to understand that all the control information is related control information of the port indicated by the port identifiers in the various control information. In this case, ports corresponding to different control information may be different. The traffic class information is also comparable in the coding embodiment, and will not be repeated herein.

Optionally, the first routing information may be static routing information (for example, static filtering entry or static tree).

The first routing information may include at least one of the following: a port identifier, media access control (Media Access Control, MAC) address related information (for example, MAC address specification), virtual local area network (Virtual Local Area Network, VLAN) identification information (for example, VLAN Identification specification), and port operation control information. In an embodiment, the first routing information is routing information of a data flow at the port.

The port operation control information can be understood as a port operation when a destination address and/or virtual local area network identifier (VID) of a data flow meets the MAC address information and/or the VLAN identification information.

Further, the port operation control information includes at least one of the following:
- forwarding, regardless of whether there is other filtering information (for example, dynamic filtering information);
- filtering, regardless of whether there is other filtering information (for example, dynamic filtering information); and
- forwarding or filtering according to other filtering information, for example, when there is dynamic filtering information, forwarding or filtering is performed according to the dynamic filtering information; or when there is no dynamic filtering information, forwarding or filtering is performed according to a default group filtering behavior.

In some embodiments, filtering may be referred to as non-forwarding, or discarding.

The priority regeneration related information may be referred to as a priority regeneration table (Priority Regeneration Table) or a priority regeneration override table (Priority Regeneration Override Table). Optionally, the priority regeneration related information may include: a first priority (also referred to as a receiving priority) and a second priority (also referred to as a regeneration priority). The priority regeneration related information is used to map a priority of a data flow having the first priority to the second priority (for example, one of integer values from 0 to 7). The first priority and the second priority may be the same or different.

Further, the priority regeneration related information may also include a port identifier, which may be used to indicate that the priority regeneration related information is valid at a port indicated by the port identifier.

In an embodiment, a packet header or flow information of the data flow includes the first priority. When the port determines to forward the data flow, the first priority of the packet header of the data flow is replaced with the second priority according to the priority regeneration table for forwarding.

Optionally, the port transmission rate (portTransmitRate) related information may include at least one of the following: a port identifier and a port transmission rate.

The bandwidth availability parameter related information may be referred to as a bandwidth availability parameter table. The bandwidth availability parameter related information may include at least one of the following: deltaBandwidth (deltaBandwidth), adminIdleSlope (adminIdleSlope), operIdleSlope (operIdleSlope), classMeasurementInterval (classMeasurementInterval), lockClassBandwidth (lockClassBandwidth), and traffic class information.

The deltaBandwidth may be embodied as a percentage value of a port transmission rate, which is a bandwidth reserved for a queue of a traffic class (for example, a traffic class indicated by the traffic class information).

The adminIdleSlope may be a bandwidth that has been requested to be reserved for managing a queue of a traffic class (for example, a traffic class indicated by the traffic class information).

The operIdleSlope may be an actual bandwidth reserved for a queue of a traffic class (for example, a traffic class indicated by the traffic class information).

In an embodiment, for a centralized architecture, the bandwidth availability parameter related information may only include the adminIdleSlope and the traffic class information. In this case, the adminIdleSlope may be equal to the operIdleSlope.

The transmission selection algorithm related information may be referred to as a transmission selection algorithm table. The transmission selection algorithm related information includes at least one of the following: traffic class information and a transmission selection algorithm.

Further, the transmission selection algorithm may include, but is not limited to, one of the following: a credit-based shaping algorithm, a strict priority transmission selection algorithm (Strict Priority Transmission selection algorithm), and a vendor-specific transmission selection algorithm.

One port can have up to eight traffic classes, and forwarding and queuing capabilities supported by each traffic class may be different. When the port identifier, the traffic class information, and the transmission selection algorithm related information are all received, transmission selection algorithm related information may be configured for the traffic classes of the indicated ports.

In some embodiments of this disclosure, an operation may be performed on a port of a wireless communications system bridge, and related control information of the port of the wireless communications system bridge may be disclosed to the outside (for example, a CNC), thereby supporting implementation of a communications system bridge composed of a terminal, a time adapter, and a wireless communications network.

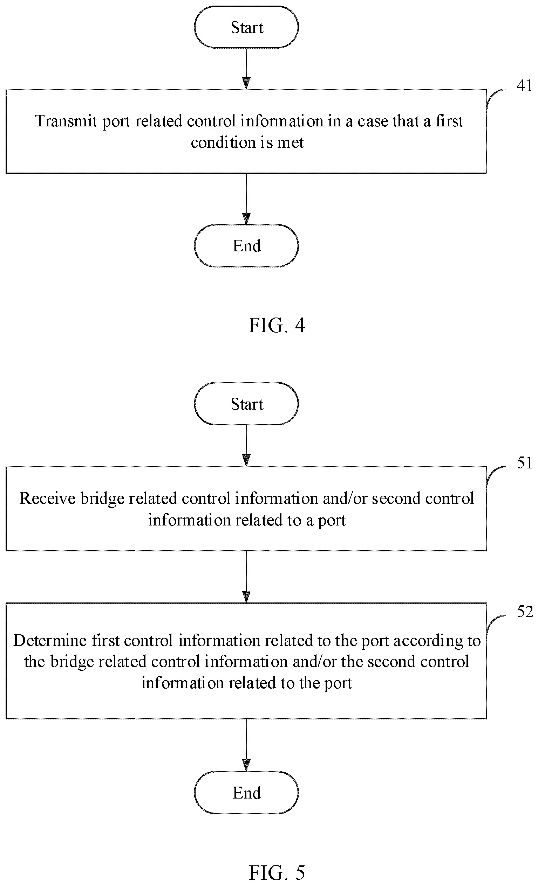

Referring to FIG. 4, some embodiments of this disclosure provide a method for supporting port control, applied to a first communications device. The first communications device includes but is not limited to at least one of the following: UE, a first adapter (for example, a DS-TT), a second adapter (for example, an NW-TT), and a UPF. The method includes step 41.

Step 41: Transmit port related control information in a case that a first condition is met.

In some embodiments, the port related control information is port-level control information. In some other embodiments, the port related control information is traffic class-level control information of the port.

In some embodiments, the first condition may include at least one of the following: that a read request for port related control information is received; that a port related PDU session is successfully established; and that the port related control information is generated or updated.

In some embodiments, the first communications device receives the read request for port related control information in a port related information container.

In some embodiments, the port is an egress port.

In some embodiments, the port is a port of a first adapter. In this case, the first adapter and/or the UE may transmit the port related control information. In some other embodiments, the port is a port of the second adapter. In this case, the second adapter and/or a UPF may transmit the port related control information.

Optionally, the read request for port related control information may include at least one of the following: a port identifier, traffic class information, a request for first routing information, a request for priority regeneration related information, a request for port transmission rate related information, a request for bandwidth availability parameter related information, and a request for transmission selection algorithm related information.

In some embodiments, the read request for port related control information includes a port identifier for requesting to obtain port related control information of a specified port. For descriptions of the port identifier and the port related control information, reference may be made to the embodiment shown in FIG. 3. Details are not repeated herein.

In some embodiments, the read request for port related control information includes traffic class information, and requests to obtain port related control information of a specified traffic class, such as bandwidth availability parameter related information and transmission selection algorithm related information. For the traffic class information, reference may be made to the embodiment shown in FIG. 3. Details are not repeated herein.

In some embodiments, the read request for port related control information includes a port identifier and traffic class information, and requests to obtain port related control information related to a specified traffic class of a specified port, such as bandwidth availability parameter related information and transmission selection algorithm related information.

Optionally, the transmitting port related control information in a case that a first condition is met includes transmitting the requested port related control information according to the read request for port related control information. For descriptions of the port related control information, reference may be made to the embodiment shown in FIG. 3. Details are not repeated herein.

In some embodiments of this disclosure, an operation may be performed on a port of a wireless communications system bridge, and related control information of the port of the wireless communications system bridge may be disclosed to the outside (for example, a CNC), thereby supporting implementation of a communications system bridge composed of a terminal, a time adapter, and a wireless communications network.

Referring to FIG. 5, some embodiments of this disclosure provide a method for supporting port control, applied to a second communications device. The second communications device includes but is not limited to at least one of the following: an application function (Application Function, AF), a policy control function (Policy Control Function, PCF), and a session management function (Session Management Function, SMF). The method includes step 51 and step 52.

Step 51: Receive bridge related control information and/or second control information related to a port.

Step 52: Determine first control information related to the port according to the bridge related control information and/or the second control information related to the port.

It can be understood that the second control information related to the port and the first control information related to the port may be the same or different.

Items included in the first control information related to the port and/or the second control information related to the port may be the same as items included in the port related control information.

Optionally, the first control information related to the port and/or the second control information related to the port may include at least one of the following: a port identifier, traffic class information, first routing information, priority regeneration related information, port transmission rate related information, bandwidth availability parameter related information, and transmission selection algorithm related information.

Optionally, for descriptions of the port identifier, traffic class information, first routing information, priority regeneration related information, port transmission rate related information, bandwidth availability parameter related information, and transmission selection algorithm related information in the first control information related to the port and/or the second control information related to the port, reference may be made to the embodiment of the method for supporting port control shown in FIG. 3.

Optionally, the bridge related control information may include at least one of the following: a bridge identifier, second routing information (for example, static filtering entry or static tree), and priority regeneration related information.

Optionally, the second routing information may be static routing information. The second routing information may include at least one of the following: MAC address related information (for example, MAC address specification), VLAN identification information (for example, VLAN identifier address specification), and a port map;

In some embodiments, the second routing information is routing information of a data flow on a bridge. The port map can be understood as port operations of a group of ports in a case that a destination address and/or VID (VLAN identifier) of a data flow matches the MAC address information and/or the VLAN identification information.

Optionally, the port map may include port operation control information of a group of ports. For the port operation control information, reference may be made to the description in the embodiment of the method for supporting port control shown in FIG. 3.

In some embodiments, the first control information related to the port is transmitted to a first communications device. Optionally, the step of transmitting the first control information related to the port includes including the first information related to the port in a port related information container and transmitting the port related information container.

In an embodiment, a bridge may receive an overall configuration of the bridge or configurations for a plurality of ports or all ports of the bridge. In this case, the bridge decomposes the configurations for each port according to the received configuration information, and configures the ports.

In some embodiments of this disclosure, an operation may be performed on a port of a wireless communications system bridge, and related control information of the port of the wireless communications system bridge may be disclosed to the outside (for example, a CNC), thereby supporting implementation of a communications system bridge composed of a terminal, a time adapter, and a wireless communications network.

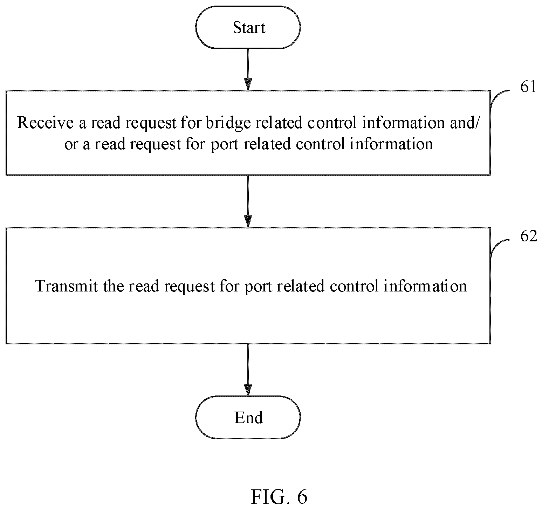

Referring to FIG. 6, some embodiments of this disclosure provide a method for supporting port control, applied to a second communications device. The second communications device may include but is not limited to at least one of the following: an AF, a PCF, and a SMF. The method includes step 61 and step 62.

Step 61: Receive a read request for bridge related control information and/or a read request for port related control information.

Step 62: Transmit the read request for port related control information.

Optionally, for the read request for port related control information, reference may be made to the descriptions in the embodiment shown in FIG. 4, and details are not repeated herein.

In an embodiment, the read request for bridge related control information may be used to obtain port related control information of all ports on a bridge (as described in the embodiment shown in FIG. 3).

Further, the read request for bridge control information may include: a bridge identifier. The port related control information of all the ports on the bridge may be requested and obtained by specifying a bridge identifier. In an embodiment, the second communications device manages one bridge, and may request, by transmitting a read request for bridge control information, port related control information of all ports of a bridge managed by the second communications device. In another embodiment, the second communications device manages a plurality of bridges, and is further required to specify a specific bridge identifier to obtain port related control information of all ports of the specified bridge.

In an embodiment, the read request for port related control information is transmitted to a first communications device.

In some embodiments of this disclosure, an operation may be performed on a port of a wireless communications system bridge, and related control information of the port of the wireless communications system bridge may be disclosed to the outside (for example, a CNC), thereby supporting implementation of a communications system bridge composed of a terminal, a time adapter, and a wireless communications network.

The method for supporting time-sensitive communication in some embodiments of this disclosure will be described below with reference to specific application scenarios.

The data transmission method in some embodiments of this disclosure will be described below with reference to specific application scenarios.

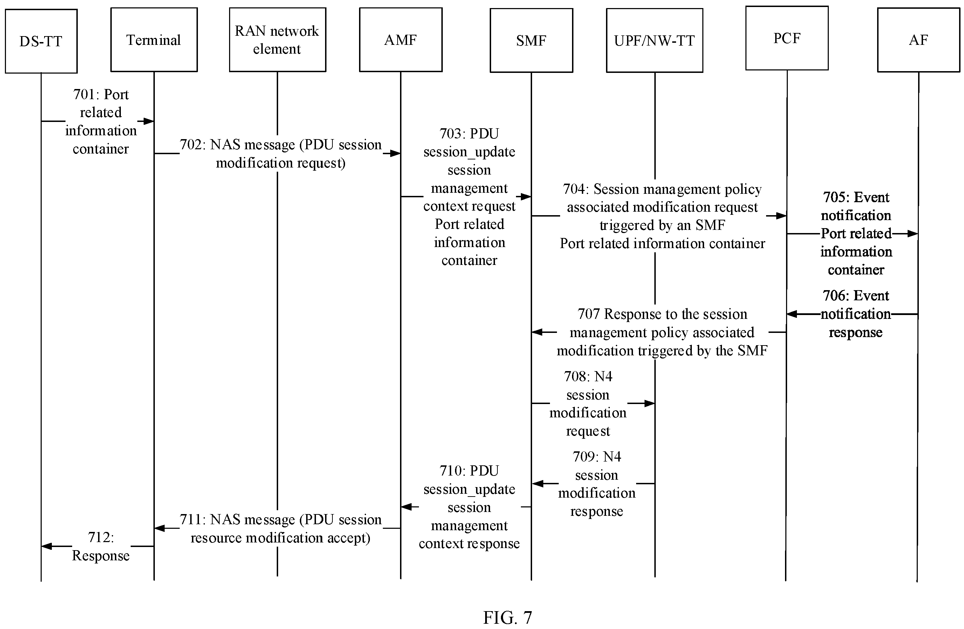

Application scenario 1 according to some embodiments of this disclosure mainly describes a PDU (Protocol Data Unit) session modification procedure triggered by UE. Referring to FIG. 7, the method includes the following steps.

Step 701: A DS-TT transmits a port related information container to UE. The port related information container includes port related control information of a port of the DS-TT (as described in the embodiment shown in FIG. 3).

Step 702: The UE initiates a PDU session modification request to an SMF. The PDU session modification request includes the port related information container in step 701.

The UE transmits the PDU session modification request to an AMF through a NAS message.

Step 703: The AMF transmits a PDU session_update session management context request to the SMF, where the PDU session update session management context request includes the PDU session modification request.

Step 704: The SMF transmits a session management policy associated modification request triggered by the SMF to a PCF. The session management policy associated modification request triggered by the SMF includes the port related information container.

Step 705: The PCF transmits an event notification to an AF. The event notification includes the port related information container. After receiving the port related control information in the port related information container, the AF transmits the port related control information to a time-sensitive networking control node (for example, a CNC). Optionally, the CNC needs to adjust the port related control information, and the CNC may transmit updated port related control information to the AF. The AF may generate a port related information container to include the port related control information.

Step 706: The AF transmits an event notification response to the PCF. Optionally, the event notification response includes the port related information container. The port related information container may include port related control information of a port of the DS-TT and/or an NW-TT (as described in the embodiment shown in FIG. 3). The port related control information in step 706 may be different from the port related control information in step 701.

Step 706: The PCF transmits to the SMF a response to the session management policy associated modification request triggered by the SMF. Optionally, the response to the session management policy associated modification request triggered by the SMF includes the port related information container in step 706.

The SMF determines whether the port related information container is a container related to an NW-TT port or to a DS-TT port. When determining as a container related to an NW-TT port, the SMF transmits the container to the UPF through step 708. When determining as a container related to a DS-TT port, step 710 is performed.

Step 708: The SMF transmits an N4 session modification request to the UPF. The N4 session modification request includes the port related information container in step 706. When the UPF and the NW-TT are combined, the UPF and/or the NW-TT may perform a port related operation on the port of the NW-TT according to the port related control information in the port related information container (as described in the embodiment shown in FIG. 3 and not repeated herein).

Step 709: The UPF transmits an N4 session modification response to the SMF.

Step 710: The SMF transmits a PDU session_update session management context response to the AMF, where the PDU session update session management context response includes a PDU session modification accept. Optionally, the PDU session modification accept includes the port related information container.

Step 711: The AMF transmits a NAS message to the UE, where the NAS message includes the PDU session modification accept.

Step 712: The UE transmits a response to the DS-TT. Optionally, the response includes the port related information container. The DS-TT may perform a port related operation on the port of the DS-TT according to the port related control information in the port related information container (as described in the embodiment shown in FIG. 3 and not repeated herein).

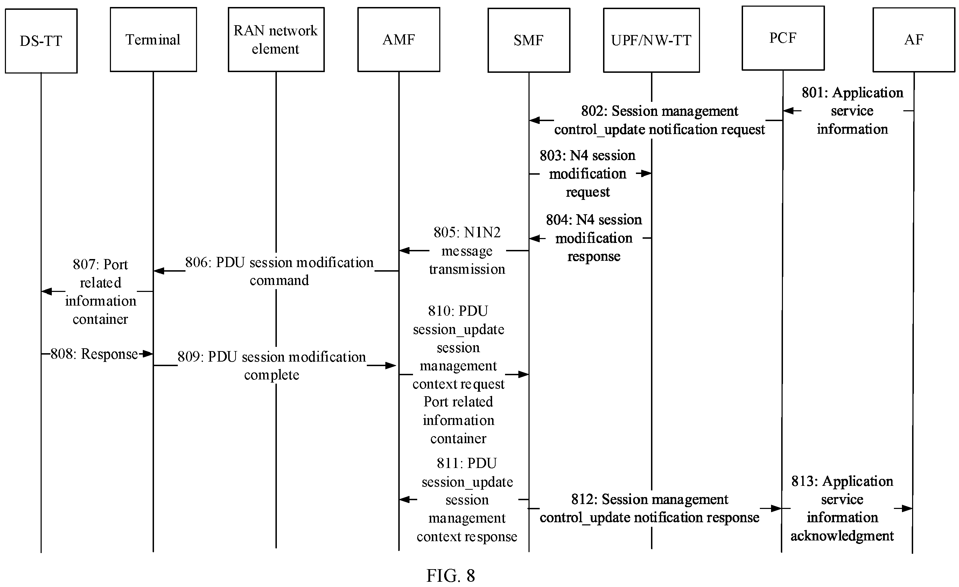

Application scenario 2 according to some embodiments of this disclosure mainly describes a PDU (Protocol Data Unit) session modification procedure triggered by a network. Referring to FIG. 8, the method includes the following steps.

Step 801: An AF transmits application service information to a PCF. Optionally, the application service information includes a port related information container. The port related information container may include a read request for port related control information of a port of a DS-TT and/or an NW-TT (as described in the embodiment shown in FIG. 4).

In an embodiment, after receiving a read request for bridge related control information and/or the read request for port related control information, the AF executes step 802 (as described in FIG. 6).

Step 802: The PCF transmits a session management control_update notification request in step 802 to the SMF. Optionally, the session management control update notification request in step 802 includes the port related information container in step 801.

The SMF determines whether the port related information container is a container related to an NW-TT port or to a DS-TT port. When determining as a container related to an NW-TT port, the SMF transmits the container to a UPF through step 803. When determining as a container related to a DS-TT port, step 805 is proceeded.

Step 803: The SMF transmits an N4 session modification request to the UPF. The N4 session modification request includes the port related information container in step 802. When the UPF and the NW-TT are combined, the UPF may transmit the port related control information of the port of the NW-TT according to the read request for port related control information in the port related information container (as described in the embodiment shown in FIG. 4 and not repeated herein).

Step 804: The UPF transmits an N4 session modification response to the SMF. The N4 session modification response includes the port related information container in step 803.

Step 805: The SMF transmits an N1N2 message transmission to an AMF, where the N1N2 message transmission includes a PDU session modification command. Optionally, the PDU session modification command includes the port related information container.

Step 806: The AMF transmits a NAS message to UE, where the NAS message includes the PDU session modification command.

Step 807: The UE transmits the port related information container to the DS-TT. The DS-TT may transmit the port related control information of the port of the DS-TT according to the read request for port related control information in the port related information container (as described in the embodiment shown in FIG. 4 and not repeated herein).

Step 808: The DS-TT transmits a response to the UE. The response includes the port related information container. The port related information container includes port related control information of a port of the DS-TT (as described in the embodiment shown in FIG. 3).

809: The UE transmits a PDU session modification complete to the SMF. The PDU session modification complete includes the port related information container in step 808.

The UE transmits the PDU session modification complete to the AMF through a NAS message.

Step 810: The AMF transmits a PDU session_update session management context request to the SMF, where the PDU session update session management context request includes the PDU session modification complete.

Step 811: The SMF transmits a PDU session update session management context response to the AMF

Step 812: The SMF transmits to a PCF a session management policy associated modification response triggered by the SMF. The session management policy associated modification response triggered by the SMF includes the port related information container in step 804 and/or the port related information container step 810.

Step 813: The PCF transmits an application service information acknowledgment to the AF. The application service information acknowledgment includes the port related information container in step 804 and/or the port related information container in step 810. After receiving the port related control information in the port related information container, the AF transmits the port related control information to a time-sensitive networking control node (for example, a CNC).

Some embodiments of this disclosure further provide a first communications device. Because a problem-resolving principle of the first communications device is similar to that of the method for supporting port control in some embodiments of this disclosure, for implementation of the first communications device, reference may be made to the implementation of the method, and details are not repeated.

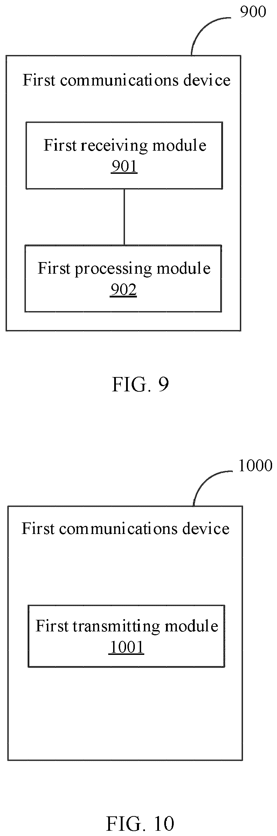

Referring to FIG. 9, some embodiments of this disclosure further provide a first communications device. The first communications device 900 includes:
a first receiving module 901, configured to receive port related control information; and
a first processing module 902, configured to perform a port related operation on a port according to the port related control information.

In some embodiments, the performing a port related operation includes at least one of the following: configuring the port, controlling whether to forward a data flow, controlling scheduling of a data flow, controlling queuing of a data flow, and controlling regenerating of a priority of a data flow.

In some embodiments, the port related control information is port-level control information, or the port related control information is traffic class-level control information of the port.

The port related control information includes at least one of the following: a port identifier, traffic class information, first routing information, priority regeneration related information, port transmission rate related information, bandwidth availability parameter related information, and transmission selection algorithm related information.

In some embodiments, the first routing information includes at least one of the following: a port identifier, MAC address related information, VLAN identification information, and port operation control information; and/or the priority regeneration related information includes at least one of the following: a first priority and a second priority, where the priority regeneration related information is used to map a priority of a data flow having the first priority to the second priority; and/or the port transmission rate related information includes at least one of the following: a port identifier and a port transmission rate.

In some embodiments, the bandwidth availability parameter related information includes at least one of the following: deltaBandwidth, adminIdleSlope, operIdleSlope, classMeasurementInterval, lockClassBandwidth, and traffic class information; and/or the transmission selection algorithm related information includes at least one of the following: traffic class information and a transmission selection algorithm.

In some embodiments, the transmission selection algorithm includes at least one of the following: a credit-based shaping algorithm, a strict priority transmission selection algorithm, and a vendor-specific transmission selection algorithm.

The first communications device according to some embodiments of this disclosure may execute the foregoing embodiments, with a similar implementation principle and similar technical effects. Details are not repeated herein in this embodiment.

Some embodiments of this disclosure further provide a first communications device. Because a problem-resolving principle of the first communications device is similar to that of the method for supporting port control in some embodiments of this disclosure, for implementation of the first communications device, reference may be made to the implementation of the method, and details are not repeated.

Referring to FIG. 10, some embodiments of this disclosure further provide a first communications device. The first communications device 1000 includes:
a first transmitting module 1001, configured to transmit port related control information in a case that a first condition is met; where
the port related control information includes at least one of the following: a port identifier, traffic class information, first routing information, priority regeneration related information, port transmission rate related information, bandwidth availability parameter related information, and transmission selection algorithm related information.

In some embodiments, the first condition includes at least one of the following: that a read request for port related control information is received; that a port related PDU session is successfully established; and that the port related control information is generated or updated.

In some embodiments, the first routing information includes at least one of the following: a port identifier, MAC address related information, VLAN identification information, and port operation control information; and/or the priority regeneration related information includes a first priority and a second priority, where the priority regeneration related information is used to map a priority of a data flow having the first priority to the second priority; and/or the port transmission rate related information includes at least one of the following: a port identifier and a port transmission rate.

In some embodiments, the bandwidth availability parameter related information includes at least one of the following: deltaBandwidth, adminIdleSlope, operIdleSlope, classMeasurementInterval, lockClassBandwidth, and traffic class information; and/or the transmission selection algorithm related information includes at least one of the following: traffic class information and a transmission selection algorithm.

In some embodiments, the transmission selection algorithm includes at least one of the following: a credit-based shaping algorithm, a strict priority transmission selection algorithm, and a vendor-specific transmission selection algorithm.

The first communications device according to some embodiments of this disclosure may execute the foregoing embodiments, with a similar implementation principle and similar technical effects. Details are not repeated herein in this embodiment.

Some embodiments of this disclosure further provide a second communications device. Because a problem-resolving principle of the second communications device is similar to that of the method for supporting port control in some embodiments of this disclosure, for implementation of the second communications device, reference may be made to the implementation of the method, and details are not repeated.

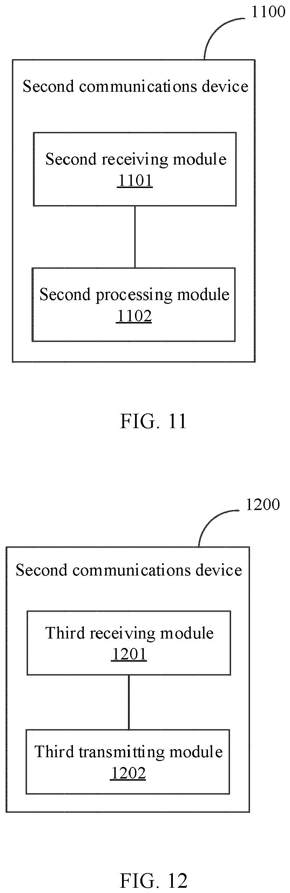

Referring to FIG. 11, some embodiments of this disclosure further provide a second communications device. The second communications device 1100 includes:
a second receiving module 1101, configured to receive bridge related control information and/or second control information related to a port; and
a second processing module 1102, configured to determine first control information related to the port according to the bridge related control information and/or the second control information related to the port; where
the first control information related to the port and/or the second control information related to the port includes at least one of the following: a port identifier, traffic class information, first routing information, priority regeneration related information, port transmission rate related information, bandwidth availability parameter related information, and transmission selection algorithm related information.

In some embodiments, the bridge related control information includes at least one of the following: a bridge identifier, second routing information, and priority regeneration related information.

In some embodiments, the second communications device 1100 further includes:
a second transmitting module, configured to transmit the first control information related to the port to a first communications device.

In some embodiments, the first routing information includes at least one of the following: a port identifier, MAC address related information, VLAN identification information, and port operation control information; and/or the priority regeneration related information includes at least one of the following: a first priority and a second priority, where the priority regeneration related information is used to map a priority of a data flow having the first priority to the second priority; and/or the port transmission rate related information includes at least one of the following: a port identifier and a port transmission rate.

In some embodiments, the bandwidth availability parameter related information includes at least one of the following: deltaBandwidth, adminIdleSlope, operIdleSlope, classMeasurementInterval, lockClassBandwidth, and traffic class information; and/or the transmission selection algorithm related information includes at least one of the following: traffic class information and a transmission selection algorithm.

In some embodiments, the transmission selection algorithm includes at least one of the following: a credit-based shaping algorithm, a strict priority transmission selection algorithm, and a vendor-specific transmission selection algorithm.

In some embodiments, the second routing information includes at least one of the following: MAC address related information, VLAN identification information, and port map; and/or the priority regeneration related information includes at least one of the following: a first priority and a second priority, where the priority regeneration related information is used to map a priority of a data flow having the first priority to the second priority.

The second communications device according to some embodiments of this disclosure may execute the foregoing embodiments, with a similar implementation principle and similar technical effects. Details are not repeated herein in this embodiment.

Some embodiments of this disclosure further provide a second communications device. Because a problem-resolving principle of the second communications device is similar to that of the method for supporting port control in some embodiments of this disclosure, for implementation of the second communications device, reference may be made to the implementation of the method, and details are not repeated.

Referring to FIG. 12, some embodiments of this disclosure further provide a second communications device. The second communications device 1200 includes:
a third receiving module 1201, configured to receive a read request for bridge related control information and/or a read request for port related control information; and
a third transmitting module 1202, configured to transmit the read request for port related control information; where
the read request for port related control information includes at least one of the following: a port identifier, traffic class information, a request for first routing information, a request for priority regeneration related information, a request for port transmission rate related information, a request for bandwidth availability parameter related information, and a request for transmission selection algorithm related information.

In some embodiments, the read request for port related control information includes at least one of the following: a port identifier, traffic class information, a request for first routing information, a request for priority regeneration related information, a request for port transmission rate related information, a request for bandwidth availability parameter related information, and a request for transmission selection algorithm related information.

In some embodiments, the read request for bridge related control information includes: a bridge identifier.

In some embodiments, the third transmitting module 1202 is further configured to transmit the read request for port related control information to a first communications device.

The second communications device according to some embodiments of this disclosure may execute the foregoing embodiments, with a similar implementation principle and similar technical effects. Details are not repeated herein in this embodiment.

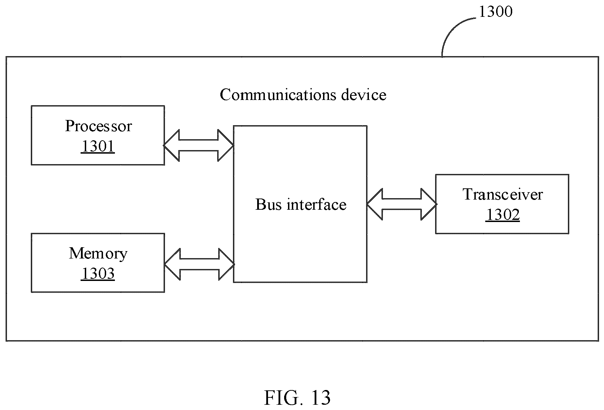

Referring to FIG. 13, FIG. 13 is a structural diagram of a communications device to which some embodiments of this disclosure are applied. As shown in FIG. 13, the communications device 1300 includes a processor 1301, a transceiver 1302, a memory 1303, and a bus interface. The processor 1301 may be responsible for managing a bus architecture and general processing. The memory 1303 may store data that the processor 1301 uses when performing an operation.

In an embodiment of this disclosure, the communications device 1300 further includes a program stored in the memory 1303 and capable of running on the processor 1301. When the program is executed by the processor 1301, the steps of the foregoing method are implemented.

In FIG. 13, a bus architecture may include any quantity of interconnected buses and bridges, and specifically connect together various circuits of one or more processors represented by the processor 1301 and a memory represented by the memory 1303. The bus architecture may further interconnect various other circuits such as a peripheral device, a voltage regulator, and a power management circuit. These are all common sense in the art, and therefore are not further described in this specification. The bus interface provides interfaces. The transceiver 1302 may be a plurality of components, that is, the transceiver 1302 includes a transmitter and a receiver, and provides a unit for communicating with various other apparatuses on a transmission medium.

The communications device according to some embodiments of this disclosure may execute the foregoing method embodiment, with a similar implementation principle and similar technical effects. Details are not repeated herein in this embodiment.

Method or algorithm steps described in combination with the content disclosed in this disclosure may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable PROM, EPROM), an electrically erasable programmable read-only memory (Electrically EPROM, EEPROM), a register, a hard disk, a removable hard disk, a compact disc read-only memory, or any other form of storage medium well-known in the art. For example, a storage medium is coupled to the processor, enabling the processor to read information from the storage medium or write information into the storage medium. Certainly, the storage medium may be a component of the processor. The processor and the storage medium may be carried in an application specific integrated circuit (application specific integrated circuit, ASIC). In addition, the ASIC may be carried in a core network interface device. Certainly, the processor and the storage medium may exist in the core network interface device as discrete components.

A person skilled in the art should be aware that in the foregoing one or more examples, functions described in this disclosure may be implemented by hardware, software, firmware, or any combination thereof. In the case of implementation by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another place. The storage medium may be any available medium accessible by a general-purpose or dedicated computer.

The objectives, technical solutions, and benefits of this disclosure are further described in detail in the foregoing specific implementations. It should be understood that the foregoing descriptions are merely specific implementations of this disclosure, but are not intended to limit the protection scope of this disclosure. Any modification, equivalent replacement, or improvement made based on the technical solutions in this disclosure shall fall within the protection scope of this disclosure.

A person skilled in the art should understand that some embodiments of this disclosure may be provided as a method, a system, or a computer program product. Therefore, some embodiments of this disclosure may be hardware-only embodiments, software-only embodiments, or embodiments with a combination of software and hardware. Moreover, some embodiments of this disclosure may be implemented in the form of one or more computer program products implemented on a computer-usable storage medium (including but not limited to a disk memory, a CD-ROM, an optical memory, and the like) that includes computer-usable program code.

Some embodiments of this disclosure are described with reference to the flowcharts and/or block diagrams of the method, the device (system), and the computer program product according to some embodiments of this disclosure. It should be understood that computer program instructions may be used to implement each process and/or each block in the flowcharts and/or the block diagrams, or a combination of a process and/or a block in the flowcharts and/or the block diagrams. These computer program instructions may be provided to a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It can be understood that the embodiments described in the embodiments of this disclosure may be implemented by hardware, software, firmware, middleware, microcode, or a combination thereof. For hardware implementation, the module, unit, submodule, subunit, and the like may be implemented in one or more application-specific integrated circuits (Application Specific Integrated Circuit, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

Obviously, a person skilled in the art can make various modifications and variations to some embodiments of this disclosure without departing from the spirit and scope of this disclosure. In this way, this disclosure is also intended to cover these modifications and variations to some embodiments of this disclosure provided that they fall within the protection scope defined by the claims of this disclosure and their equivalent technologies.

## Claims

1. A method for supporting port control, applied to a first communications device, comprising:
receiving port related control information; and
performing a port related operation on a port according to the port related control information; wherein
the port related control information comprises at least one of the following: a port identifier, traffic class information, first routing information, priority regeneration related information, port transmission rate related information, bandwidth availability parameter related information, and transmission selection algorithm related information.

2. The method according to claim 1, wherein the performing a port related operation comprises at least one of the following: configuring the port, controlling whether to forward a data flow, controlling scheduling of a data flow, controlling queuing of a data flow, and controlling regenerating of a priority of a data flow.

3. The method according to claim 1, wherein the receiving port related control information comprises: receiving a port related information container, and the port related information container comprises the port related control information.

4. The method according to claim 1, wherein the first communications device comprises at least one of the following: a network-side time-sensitive networking translator NW-TT and a user plane function UPF.

5. The method according to claim 1, wherein the first routing information comprises at least one of the following: a port identifier, media access control MAC address related information, virtual local area network VLAN identification information, and port operation control information;
and/or
the priority regeneration related information comprises at least one of the following: a first priority and a second priority, wherein the priority regeneration related information is used to map a priority of a data flow having the first priority to the second priority;
and/or
the port transmission rate related information comprises at least one of the following: a port identifier and a port transmission rate.

6. The method according to claim 5, wherein in a case that the first routing information comprises a port identifier, media access control MAC address related information, and virtual local area network VLAN identification information, the performing a port related operation on a port according to the port related control information comprises: forwarding, through a port corresponding to the port identifier, a data flow carrying the MAC address related information and the VLAN identification information.

7. The method according to claim 1, wherein the bandwidth availability parameter related information comprises at least one of the following: deltaBandwidth, adminIdleSlope, operIdleSlope, classMeasurementInterval, lockClassBandwidth, and traffic class information;
and/or
the transmission selection algorithm related information comprises at least one of the following: traffic class information and a transmission selection algorithm.

8. The method according to claim 7, wherein the transmission selection algorithm comprises at least one of the following: a credit-based shaping algorithm, a strict priority transmission selection algorithm, and a vendor-specific transmission selection algorithm.

9. The method according to claim 1, further comprising:
transmit port related control information in a case that a first condition is met; wherein
the first condition comprises at least one of the following: that a read request for port related control information is received; that a port related protocol data unit PDU session is successfully established; and that the port related control information is generated or updated.

10. A method for supporting port control, applied to a first communications device, comprising:
transmitting port related control information in a case that a first condition is met; wherein
the port related control information comprises at least one of the following: a port identifier, traffic class information, first routing information, priority regeneration related information, port transmission rate related information, bandwidth availability parameter related information, and transmission selection algorithm related information.

11. The method according to claim 10, wherein the first condition comprises at least one of the following: that a read request for port related control information is received; that a port related protocol data unit PDU session is successfully established; and that the port related control information is generated or updated.

12. The method according to claim 10, wherein the first routing information comprises at least one of the following: a port identifier, MAC address related information, VLAN identification information, and port operation control information;
and/or
the priority regeneration related information comprises at least one of the following: a first priority and a second priority, wherein the priority regeneration related information is used to map a priority of a data flow having the first priority to the second priority;
and/or
the port transmission rate related information comprises at least one of the following: a port identifier and a port transmission rate.

13. The method according to claim 10, wherein the bandwidth availability parameter related information comprises at least one of the following:
deltaBandwidth, adminIdleSlope, operIdleSlope, classMeasurementInterval, lockClassBandwidth, and traffic class information;
and/or the transmission selection algorithm related information comprises at least one of the following: traffic class information and a transmission selection algorithm.

14. The method according to claim 13, wherein the transmission selection algorithm comprises at least one of the following: a credit-based shaping algorithm, a strict priority transmission selection algorithm, and a vendor-specific transmission selection algorithm.

15. The method according to claim 10, wherein the first communications device comprises at least one of the following: a network-side time-sensitive networking translator NW-TT and a user plane function UPF.

16. The method according to claim 10, wherein the transmitting port related control information comprises: transmitting a port related information container, and the port related information container comprises the port related control information.

17. A method for supporting port control, applied to a second communications device, comprising:
receiving bridge related control information and/or second control information related to a port; and
determining first control information related to the port according to the bridge related control information and/or the second control information related to the port; wherein
the first control information related to the port and/or the second control information related to the port comprises at least one of the following: a port identifier, traffic class information, first routing information, priority regeneration related information, port transmission rate related information, bandwidth availability parameter related information, and transmission selection algorithm related information; and
the bridge related control information comprises at least one of the following: a bridge identifier, second routing information, and priority regeneration related information.

18. The method according to claim 17, further comprising:
transmitting the first control information related to the port to a first communications device.

19. The method according to claim 17, wherein the first routing information comprises at least one of the following: a port identifier, MAC address related information, VLAN identification information, and port operation control information;
and/or
the priority regeneration related information comprises at least one of the following: a first priority and a second priority, wherein the priority regeneration related information is used to map a priority of a data flow having the first priority to the second priority;
and/or
the port transmission rate related information comprises at least one of the following: a port identifier and a port transmission rate.

20. The method according to claim 17, wherein the bandwidth availability parameter related information comprises at least one of the following: deltaBandwidth, adminIdleSlope, operIdleSlope, classMeasurementInterval, lockClassBandwidth, and traffic class information;
and/or
the transmission selection algorithm related information comprises at least one of the following: traffic class information and a transmission selection algorithm.

21. The method according to claim 20, wherein the transmission selection algorithm comprises at least one of the following: a credit-based shaping algorithm, a strict priority transmission selection algorithm, and a vendor-specific transmission selection algorithm.

22. The method according to claim 17, wherein the second routing information comprises at least one of the following: MAC address related information, VLAN identification information, and a port map;
and/or
the priority regeneration related information comprises at least one of the following: a first priority and a second priority, wherein the priority regeneration related information is used to map a priority of a data flow having the first priority to the second priority.

23. A method for supporting port control, applied to a second communications device, comprising:
receiving a read request for bridge related control information and/or a read request for port related control information; and
transmitting the read request for port related control information; wherein
the read request for port related control information comprises at least one of the following: a port identifier, traffic class information, a request for first routing information, a request for priority regeneration related information, a request for port transmission rate related information, a request for bandwidth availability parameter related information, and a request for transmission selection algorithm related information.

24. The method according to claim 23, wherein the read request for bridge related control information comprises: a bridge identifier.

25. The method according to claim 23, wherein the transmitting the read request for port related control information comprises:
transmitting the read request for port related control information to a first communications device.

26. A first communications device, comprising:
a first receiving module, configured to receive port related control information; and
a first processing module, configured to perform a port related operation on a port according to the port related control information; wherein
the port related control information comprises at least one of the following: a port identifier, traffic class information, first routing information, priority regeneration related information, port transmission rate related information, bandwidth availability parameter related information, and transmission selection algorithm related information.

27. The first communications device according to claim 26, wherein the first receiving module is configured to receive a port related information container, and the port related information container comprises the port related control information.

28. The first communications device according to claim 26, comprising at least one of the following: a network-side time-sensitive networking translator NW-TT and a user plane function UPF.

29. The first communications device according to claim 26, wherein the first routing information comprises at least one of the following: a port identifier, media access control MAC address related information, virtual local area network VLAN identification information, and port operation control information;
and/or
the priority regeneration related information comprises at least one of the following: a first priority and a second priority, wherein the priority regeneration related information is used to map a priority of a data flow having the first priority to the second priority;
and/or
the port transmission rate related information comprises at least one of the following: a port identifier and a port transmission rate.

30. The first communications device according to claim 29, wherein in a case that the first routing information comprises a port identifier, media access control MAC address related information, and virtual local area network VLAN identification information, the performing a port related operation on a port according to the port related control information comprises: forwarding, through a port corresponding to the port identifier, a data flow carrying the MAC address related information and the VLAN identification information.

31. A first communications device, comprising:
a first transmitting module, configured to transmit port related control information in a case that a first condition is met; wherein
the port related control information comprises at least one of the following: a port identifier, traffic class information, first routing information, priority regeneration related information, port transmission rate related information, bandwidth availability parameter related information, and transmission selection algorithm related information.

32. The first communications device according to claim 31, wherein the first condition comprises at least one of the following: that a read request for port related control information is received; that a port related protocol data unit PDU session is successfully established; and that the port related control information is generated or updated.

33. The first communications device according to claim 31, wherein the first routing information comprises at least one of the following: a port identifier, MAC address related information, VLAN identification information, and port operation control information;
and/or
the priority regeneration related information comprises at least one of the following: a first priority and a second priority, wherein the priority regeneration related information is used to map a priority of a data flow having the first priority to the second priority;
and/or
the port transmission rate related information comprises at least one of the following: a port identifier and a port transmission rate.

34. The first communications device according to claim 31, comprising at least one of the following: a network-side time-sensitive networking translator NW-TT and a user plane function UPF.

35. The first communications device according to claim 31, wherein the first transmitting module is configured to transmit a port related information container, and the port related information container comprises the port related control information.

36. A second communications device, comprising:
a second receiving module, configured to receive bridge related control information and/or second control information related to a port; and
a second processing module, configured to determine first control information related to the port according to the bridge related control information and/or the second control information related to the port; wherein
the first control information related to the port and/or the second control information related to the port comprises at least one of the following: a port identifier, traffic class information, first routing information, priority regeneration related information, port transmission rate related information, bandwidth availability parameter related information, and transmission selection algorithm related information; and
the bridge related control information comprises at least one of the following: a bridge identifier, second routing information, and priority regeneration related information.

37. The second communications device according to claim 36, comprising:
a second transmitting module, configured to transmit the first control information related to the port to a first communications device.

38. The second communications device according to claim 36, wherein the first routing information comprises at least one of the following: a port identifier, MAC address related information, VLAN identification information, and port operation control information;
and/or
the priority regeneration related information comprises at least one of the following: a first priority and a second priority, wherein the priority regeneration related information is used to map a priority of a data flow having the first priority to the second priority;
and/or
the port transmission rate related information comprises at least one of the following: a port identifier and a port transmission rate.

39. A second communications device, comprising:
a third receiving module, configured to receive a read request for bridge related control information and/or a read request for port related control information; and
a third transmitting module, configured to transmit the read request for port related control information; wherein
the read request for port related control information comprises at least one of the following: a port identifier, traffic class information, a request for first routing information, a request for priority regeneration related information, a request for port transmission rate related information, a request for bandwidth availability parameter related information, and a request for transmission selection algorithm related information.

40. The second communications device according to claim 39, wherein the read request for bridge related control information comprises: a bridge identifier.

41. The second communications device according to claim 39, wherein the third transmitting module is configured to transmit the read request for port related control information to a first communications device.

42. A communications device, comprising a processor, a memory, and a program stored in the memory and capable of running on the processor, wherein when the program is executed by the processor, the steps of the method for supporting port control according to any one of claims 1 to 25 are implemented.

43. A readable storage medium, wherein the readable storage medium stores a program, and when the program is executed by a processor, the steps of the method for supporting port control according to any one of claims 1 to 25 are implemented.
